# DEMANDE DE BREVET EUROPEEN

(11) **EP 1 220 540 A1**
(43) Date de publication de la demande: **03.07.2002**
(21) Numéro de dépôt: 01403292.4
(22) Date de dépôt: 18.12.2001
(51) Int. Cl.: H04N 7/16

(54) **Procédé de diffusion d'informations de programmes**

(30) Priorité: 02.01.2001 FR 0100019
(71) Demandeur: Television Française 1 ( TF1 ), 92100 Boulogne-Billacourt (FR)
(72) Inventeur: Marfaing, Pierre, 78000 Versailles (FR); Grellier, Christian, 94790 Vaureal (FR); Cremer, Eric, 75014 Paris (FR); Lemaitre, Nicolas, 75015 Paris (FR); Gardy, Régis, 75015 Paris (FR)
(74) Mandataire: de Roquemaurel, Bruno

(57) **Abrégé**

Pour informer les utilisateurs d'un réseau (18) de diffusion de programmes audiovisuels, des horaires de diffusion et du contenu des programmes diffusés sur au moins un canal du réseau de diffusion, les programmes audiovisuels étant associés à des informations concernant le contenu du programme et à des horaires de diffusion, ce procédé comprend les étapes consistant à : insérer au moins une partie des informations et des horaires de diffusion associés à chaque programme dans des zones respectives prédéfinies de trames d'écran pour réaliser des écrans donnant des informations sur les horaires de diffusion et le contenu des programmes, établir un lien entre chacun desdits écrans de manière à constituer une séquence d'annonce enchaînant la diffusion desdits écrans, et diffuser la séquence d'annonce sur un canal du réseau, chaque écran étant diffusé sur le réseau pendant une durée prédéfinie.

## Description

La présente invention concerne un procédé pour informer les utilisateurs d'un réseau de diffusion de programmes audiovisuels des horaires de diffusion et du contenu des programmes diffusés par le réseau.

Elle s'applique notamment, mais non exclusivement, à un système de diffusion locale de programmes multimédia, vidéo et/ou audio transmis depuis un site central et stockés localement sur le site de diffusion, et plus généralement à tout système de diffusion de programmes à horaires planifiés, dans lequel les programmes diffusés se présentent sous la forme de documents numériques structurés comprenant le programme en tant que tel sous forme numérique, associé à des informations concernant le programme, comme son titre, sa catégorie, les langues disponibles, la langue de sous-titrage éventuel, etc.

Dans de tels systèmes, les utilisateurs ont besoin pour choisir un programme de connaître au moins les noms et les horaires de diffusion des programmes sur le ou les canaux qui sont mis à leur disposition.
Habituellement, dans un système de diffusion à grande échelle dit "grand public", les programmes sont planifiés longtemps à l'avance, si bien qu'il est possible d'imprimer un guide qui est distribué aux utilisateurs. Toutefois, cette solution s'avère relativement coûteuse et peu souple dans la mesure où elle ne peut prendre en compte des changements de planification.

Dans un système de diffusion locale de programmes, par exemple dans un hôtel, l'annonce des horaires de diffusion des programmes est également effectuée à l'aide d'un guide imprimé qui est mis à la disposition des utilisateurs. Cette solution n'est envisageable que si les programmes ainsi diffusés localement sont peu nombreux et identiques d'un site de diffusion à l'autre, et dont les changements de programmes sont peu fréquents et planifiés suffisamment longtemps à l'avance.
Cette solution n'est pas applicable dans un système où les programmes transmis et reçus localement ne sont stockés et diffusés par le site local de diffusion que s'ils satisfont à un certain nombre de critères de sélection, de sorte qu'il n'est pas possible de connaître à l'avance les programmes qui seront ainsi sélectionnés et diffusés localement, ni la version linguistique dans laquelle ils seront diffusés.

Il existe donc un besoin pour un moyen peu coûteux permettant d'informer des utilisateurs d'un réseau de diffusion de programmes audiovisuels sur les horaires de diffusion et le contenu des programmes qui sont ainsi diffusés.

La présente invention a pour but de répondre à ce besoin. Cet objectif est atteint par la prévision d'un procédé pour informer les utilisateurs d'un réseau de diffusion de programmes audiovisuels, des horaires de diffusion et du contenu des programmes diffusés sur au moins un canal du réseau de diffusion, les programmes audiovisuels étant associés à des informations concernant le contenu du programme et à des horaires de diffusion.
Selon l'invention, ce procédé comprend les étapes consistant à :
- insérer au moins une partie des informations et des horaires de diffusion associés à chaque programme dans des zones respectives prédéfinies de trames d'écran pour réaliser des écrans donnant des informations sur les horaires de diffusion et le contenu des programmes,
- établir un lien entre chacun desdits écrans de manière à constituer une séquence d'annonce enchaînant la diffusion desdits écrans, et
- diffuser la séquence d'annonce sur un canal du réseau, chaque écran étant diffusé sur le réseau pendant une durée prédéfinie.

De cette manière, tous les utilisateurs du réseau de diffusion peuvent être informés des programmes qui sont diffusés et des horaires de diffusion de ces derniers. En outre, la constitution de la séquence d'annonce est automatique et ne requiert pas l'intervention d'un opérateur.

Avantageusement, la séquence comprend :
- au moins un écran donnant la liste des programmes en cours de diffusion sur les différents canaux,
- au moins un écran par canal donnant la liste des prochains programmes diffusés sur ce canal, et
- un écran par programme diffusé donnant des informations sur le contenu et les horaires de diffusion du programme.

Selon une particularité de l'invention, chaque écran de la séquence d'annonce est associé à la référence d'un autre écran de la séquence, de manière à définir l'ordre dans lequel les écrans de la séquence sont diffusés.

De préférence, le dernier écran de la séquence d'annonce est associé à la référence du premier écran de la séquence, de manière à ce que la séquence soit diffusée en permanence.

Selon une autre particularité de l'invention, un canal du réseau est réservé à la diffusion de la séquence d'annonce.

Chaque écran de la séquence est de préférence diffusé avec un fond sonore.

Avantageusement, les informations concernant le contenu d'un programme diffusé comprennent une séquence vidéo de promotion du programme, qui est insérée dans la séquence d'annonce.

Selon encore une autre particularité de l'invention, ce procédé comprend en outre la mise à jour des écrans de la séquence d'annonce au début et à la fin de la diffusion de chaque programme sur le réseau, et à chaque nouvelle planification de la diffusion d'un programme.

De préférence, les programmes diffusés sur le réseau sont stockés dans une base de programmes comprenant une cellule de stockage par programme susceptible d'être diffusé par le réseau, chaque cellule de stockage étant associée à des plages horaires de diffusion, le procédé comprenant en outre la mise à jour des écrans de la séquence d'annonce à chaque remplacement d'un programme stocké dans une cellule de la base de programmes.

Dans ce contexte, lorsqu'un programme diffusé est remplacé par un nouveau programme, le procédé selon l'invention comprend en outre la mise à jour automatique, à une heure paramétrable, de la séquence d'annonce pour annoncer la diffusion du nouveau programme.

Un mode de réalisation préféré de l'invention sera décrit ci-après, à titre d'exemple non limitatif, avec référence aux dessins annexés dans lesquels :
La figure 1 représente schématiquement un système de diffusion de programmes entre un site central et des sites locaux, auquel s'applique le procédé selon l'invention ;
La figure 2 montre plus en détail le système installé sur un site de diffusion locale de programmes ;
La figure 3 montre d'une manière plus détaillée un dispositif pour la mise en oeuvre du procédé selon l'invention sur un site local ;
Les figures 4a à 4c représentent les trames de différents écrans qui sont enchaînés dans la séquence d'annonce des programmes diffusés.

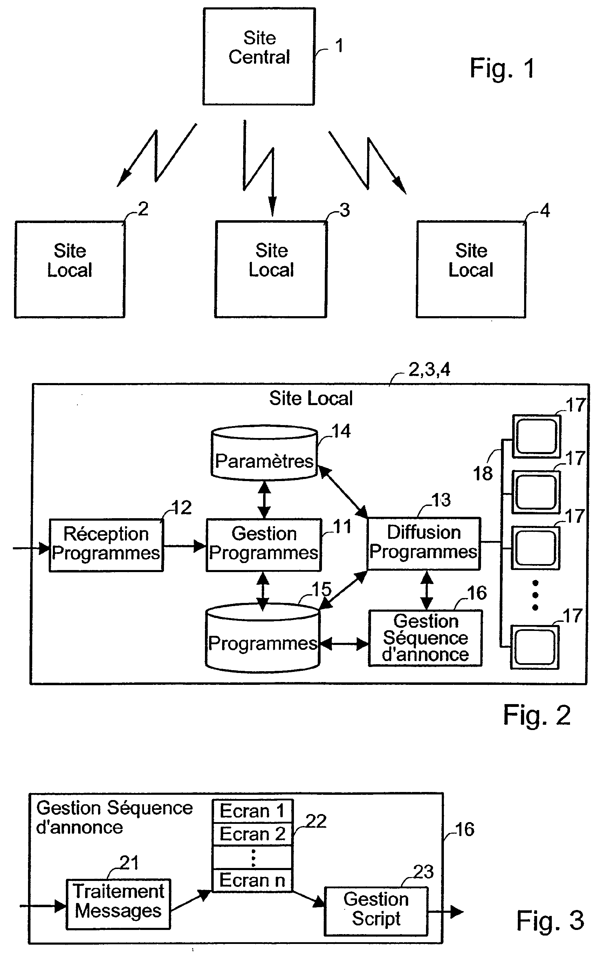

La figure 1 représente un système de distribution de programmes audiovisuels comprenant un site central 1 qui transmet à une pluralité de sites locaux 2, 3, 4 des programmes audiovisuels, tels que des films. Le lien de transmission entre le site central et les sites locaux peut être constitué par des liaisons haut débit, par exemple des liaisons satellite ou câblées.

Sur la figure 2, le système installé sur chaque site local 2, 3, 4 comprend :
- un module de réception 12 conçu pour gérer les transmissions avec le site central 1, et en particulier, pour recevoir les programmes transmis par le site central et traiter les erreurs de transmission,
- un module de gestion 11 des programmes diffusés sur le site 2, 3, 4, conçu pour sélectionner les programmes reçus en fonction de certains critères, et stocker dans une base de données de programmes 15 les programmes ainsi sélectionnés,
- un module de diffusion 13 de programmes, conçu pour diffuser les programmes stockés dans la base de données de programmes 15 sur un réseau local 18 auquel sont reliés une pluralité de terminaux 17, tels que des postes de télévision.

Le réseau local 18 comprend avantageusement une pluralité de canaux vidéo de diffusion de programmes, que les utilisateurs peuvent sélectionner à partir de leur terminal, par exemple au moyen d'une télécommande.

Les programmes reçus se présentent avantageusement sous la forme de fichiers numériques structurés comprenant, en association avec le programme en tant que tel, des données d'identification du programme sur lesquels s'appliquent des critères de sélection qui sont définis pour chaque site local dans une base de paramètres 14.

Ces données d'identification de programme peuvent comporter notamment pour chaque programme :
- un nom permettant d'identifier de façon unique le programme quelle que soit la langue associée,
- une catégorie et une sous catégorie,
- une liste de langues disponibles,
- un niveau de censure,
- une image représentant le programme (s'il s'agit d'un film, par exemple l'affiche du film),
et éventuellement :
- le pays de production du programme, et
- si le programme est un film un fichier son contenant une musique générique s'il s'agit d'un film, et un fichier contenant une bande annonce de film.

Dans un système de vidéo à la demande, les programmes sont diffusés à la demande de chaque utilisateur. Il en résulte qu'il est nécessaire de pouvoir disposer d'un réseau local comprenant autant de canaux vidéo que d'utilisateurs pouvant visualiser simultanément un programme sur un terminal respectif. Pour limiter le nombre de canaux nécessaires, on peut prévoir un système de diffusion de programmes à horaires planifiés, dans lequel les programmes sont diffusés à des horaires prédéfinis les uns à la suite des autres sur un nombre limité de canaux.

La base de données de programmes 15 comprend une cellule par programme, chaque cellule étant associée à des paramètres définissant les canaux et les plages de diffusion du programme qu'elle contient, ainsi qu'à des critères de sélection de programme portant sur les informations associées à chaque programme, telles que la catégorie ou sous-catégorie, les langues disponibles ou encore le niveau de censure.

Comme les programmes transmis par le site central 1 ne sont pas nécessairement connus des sites locaux, et que, à l'inverse, le site central ne connaît pas nécessairement les critères de sélection de programmes appliqués sur chaque site, ni le site central ni les sites locaux ne peuvent déterminer à l'avance quels seront les programmes qui seront diffusés un site donné.
Il en résulte que dans le mode de diffusion à horaires planifiés, il est difficile d'annoncer aux utilisateurs des terminaux 17 quels programmes seront diffusés sur chaque canal, ni les horaires de ces diffusions.

Selon l'invention, le système installé sur chaque site local 2, 3, 4 comprend en outre un module de gestion 16 d'une séquence d'annonce des programmes diffusés sur le site local, conçu pour réaliser une séquence d'annonce donnant des informations aux utilisateurs sur les programmes diffusés sur les différents canaux du réseau local 18, cette séquence d'annonce étant diffusée sur un canal du réseau local réservé à cet effet, ou bien par exemple entre deux programmes diffusés sur un même canal.
Toutefois, l'utilisation d'un canal spécifique pour la diffusion de la séquence d'annonce présente l'avantage de pouvoir informer les utilisateurs à tout moment.

La diffusion sur le réseau 18 de la séquence d'annonce réalisée par le module 16 est assurée par le module de diffusion de programmes 13

Sur la figure 3, le module de gestion 16 comprend un module de traitement de messages 21 conçu pour communiquer avec le module de diffusion de programmes 13 et mettre à jour une zone mémoire 22 contenant la définition des différents écrans qui sont enchaînés dans la séquence d'annonce des programmes, et un module de séquencement 23 des différents écrans stockés dans la zone 22. Ce module de séquencement permet de contrôler la durée d'affichage de chaque écran et l'ordre d'affichage des écrans qui sont ainsi affichés successivement.

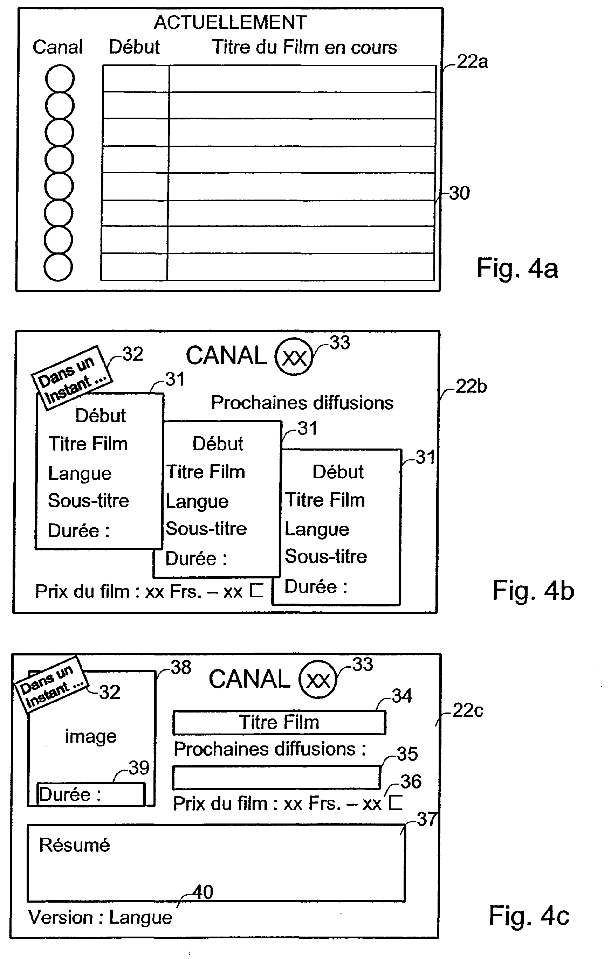

Les figures 4a à 4c montrent des trames d'écrans qui sont utilisés pour réaliser en temps réel la séquence d'annonce, ces trames d'écran comportent avantageusement des zones dans lesquelles sont insérées des informations relatives aux programmes diffusés sur les différents canaux du réseau local.

On peut par exemple prévoir d'utiliser trois trames d'écran différentes, à savoir une trame d'écran de présentation des différents programmes en cours de diffusion sur les canaux du réseau local (figure 4a), une trame d'écran de présentation des prochaines diffusions de programmes sur un canal donné (figure 4b), et une trame d'écran de présentation du contenu d'un programme et des prochaines heures de diffusion de ce dernier (figure 4c).

Bien entendu, d'autres écrans peuvent être insérés dans la séquence d'annonce. Ainsi par exemple, si le système de diffusion locale comprend un service de vidéo à la demande, on peut prévoir d'insérer des écrans de promotion de ce service ou des programmes diffusés par ce service. La séquence d'annonce peut également incorporer des écrans de promotion d'autres services offerts localement, ou encore des écrans d'information telles que des informations publicitaires.

Sur la figure 4a, la trame de présentation 22a des diffusions en cours se présente sous la forme d'un tableau 30 comprenant une ligne par programme en cours de diffusion, et donnant pour chaque programme le numéro du canal de diffusion du programme, l'heure de début de diffusion et le titre du programme.

L'écran 22b représenté sur la figure 4b fournit les m prochaines diffusions de programmes sur un canal déterminé, (m étant paramétrable et choisi par exemple égal à trois). Cet écran indique le numéro du canal et pour chaque programme, il comprend un cadre 31 incluant l'heure de début de diffusion du programme, le titre du programme, la langue, la langue du sous-titrage éventuel, et la durée du programme. Dans le cas de programmes payants, il fournit également une indication tarifaire, par exemple le prix par programme ou par période.

L'écran 22c donne des informations détaillées sur un programme. A cet effet, il comprend une zone 33 pour l'affichage du numéro de canal, un cadre 34 dans lequel est inséré le titre du programme, un cadre 35 donnant les heures des n prochaines diffusions (n étant paramétrable et par exemple choisi égal à trois), une zone 38 prévue pour l'affichage d'une image représentative du programme, par exemple l'affiche dans le cas d'un film, un cadre 39 réservé à l'insertion de la durée du programme, un cadre 37 réservé à l'insertion d'un résumé ou d'un descriptif du programme, une zone 36 réservée à l'insertion d'une indication tarifaire, par exemple le prix de visualisation du programme et une zone 40 donnant la langue du programme et éventuellement la langue du sous-titrage du programme. Les informations fournies dans ces écrans sont de préférence dans la langue de diffusion du programme correspondant.

Lorsque la diffusion d'un programme doit commencer dans un délai inférieur à une durée prédéfinie paramétrable (par exemple 30 minutes), on peut prévoir de l'indiquer par une étiquette 32 affichée en surimpression sur l'écran 22b ou 22c. On peut aussi prévoir de marquer d'une manière particulière dans les écrans de type 22b et 22c les prochaines diffusions planifiées.

Tous ces écrans peuvent également comporter une indication de la touche de commande à sélectionner pour accéder à un autre service tel qu'un service de vidéo à la demande.

La zone de stockage 22 comprend un écran du type 22a qui peut être constitué de plusieurs pages si le nombre de programmes en cours de diffusion dépasse le nombre de lignes du tableau 30, au moins un écran du type 22b par canal de diffusion de programmes, et un écran du type 22c par programme. Elle comprend également des paramètres généraux, à savoir pour chaque type d'écran, la référence d'un fichier image de fond d'écran, des paramètres de définition de l'étiquette 32 et de sa position dans l'écran, un nom de fichier contenant un fond sonore à diffuser pendant l'affichage de l'écran, la durée d'affichage de l'écran, des paramètres de définition du contrôle de volume du son accompagnant la diffusion de l'écran, des paramètres de définition des différentes zones à compléter de l'écran, à savoir leur position, taille et les polices de caractères à utiliser. Ces paramètres peuvent également comprendre pour chaque type d'écran, le nombre de diffusions indiquées dans l'écran.
Les images de fond d'écran et les fichiers de fond sonore peuvent être choisis en fonction de la catégorie à laquelle appartient le programme, indiquée dans les données associées au programme dans la base de données 15.

Le séquencement de la diffusion des différents écrans de la séquence d'annonce est effectué par le module de séquencement 23 qui dispose à cet effet pour chaque écran du type de l'écran pour déterminer le fichier de fond sonore associé et la durée d'affichage de l'écran, et de la référence de l'écran suivant à afficher.

De cette manière, tous les écrans de la séquence d'annonce sont diffusés sur le canal prévu à cet effet, dans un ordre déterminé. Le dernier écran de la séquence peut référencer le premier écran de la séquence de manière à ce que la séquence d'annonce soit ainsi diffusée en permanence.

Les écrans sont avantageusement enchaînés de telle manière que les écrans des diffusions en cours de type 22a apparaissent en premier, puis pour chaque canal, l'écran de type 22b du canal, suivi des écrans de type 22c des programmes annoncés dans l'écran 22b précédent.

Les données associées à certains programmes diffusés peuvent comprendre une musique générique et une séquence vidéo de promotion du programme, comme par exemple une bande annonce pour une oeuvre cinématographique. Dans ce cas, la musique générique peut accompagner la diffusion de l'écran 22c de présentation détaillée du programme et la séquence vidéo de promotion peut être insérée dans la séquence d'annonce des programmes, soit à la suite, soit en remplacement de l'écran 22c d'annonce du contenu du programme.

En outre, d'autres séquences vidéo peuvent être ainsi insérées dans la séquence d'annonce. Ces séquences vidéo peuvent fournir des informations générales ou particulières sur le site local de diffusion, ou encore consister en des séquences publicitaires.

Le module de traitement 21 des messages met à jour la zone mémoire 22 en fonction de messages de changement de programmes et de début et de fin de diffusion, émis par les modules de gestion des programmes 11 et des diffusions 13 et à l'aide des informations contenues dans la base de données de programmes 15.

Ainsi, lorsque le module de réception de programmes 12 reçoit un nouveau programme qui est sélectionné par le module de gestion 11, il est stocké dans une cellule de la base de données 15 dont les critères de sélection correspondants sont satisfaits par les informations associées au programme.
La mise à jour du contenu d'une la cellule dans la base de données 15 est de préférence effectuée à une heure de faible écoute pour ne pas perturber le service de diffusion des programmes. L'heure de mise à jour est avantageusement paramétrable.
Cette mise à jour de la base de données 15 entraîne l'émission par le module de gestion 11 d'un message de mise à jour contenant une référence à la cellule ainsi mise à jour, à destination du module de gestion 16 de la séquence d'annonce.
A la réception d'un tel message qui intervient également à une heure de faible écoute, le module de traitement 21 accède à la base de données 15 pour récupérer les informations associées au nouveau programme reçu et met à jour dans la zone 22 tous les écrans 22a, 22b, 22c concernés par cette mise à jour. Une telle mise à jour peut nécessiter au préalable une interruption de la diffusion de la séquence d'annonce.

Alternativement, La mise à jour de la séquence d'annonce peut être effectuée périodiquement, également de préférence à une heure paramétrable choisie à un moment de faible écoute, par le module de traitement 21 qui déclenche l'interruption de la diffusion de la séquence d'annonce, scrute le contenu de toutes les cellules de la base de programmes 15 et reconstitue les différents écrans 22a, 22b, 22c de la séquence, puis active la diffusion de la nouvelle séquence d'annonce.

Grâce à l'invention, la mise à jour de la séquence d'annonce est ainsi effectuée automatiquement et accessible presque instantanément à tous les utilisateurs.

Un certain temps paramétrable (par exemple 30 minutes) avant chaque diffusion prévue de programme, le module de diffusion 13 de programme envoie au module de traitement 21 un message de commencement prochain d'un programme. A la réception d'un tel message, le module de traitement 21 met à jour les écrans 22b et 22c mentionnant le programme pour y ajouter l'étiquette 32.

Au déclenchement de la diffusion d'un programme, le module de diffusion 13 signale cet événement au module de traitement 21 qui met à jour l'écran de type 22a pour y ajouter le titre, l'heure de début et le numéro de canal du programme qui sont lus dans la base de données 15, ainsi que les écrans 22b et 22c mentionnant le programme pour y retirer l'étiquette 32 et pour décaler le contenu des cadres 31 dans les écrans de type 22b, de manière à y présenter les trois programmes suivants celui dont la diffusion vient de commencer, et modifier le contenu du cadre 35 dans l'écran 22c correspondant au programme.

De même, le module de traitement 21 est averti de la fin de diffusion d'un programme, ce qui lui permet de mettre à jour l'écran 22a des diffusions en cours pour y retirer la référence au programme dont la diffusion est terminée.

La base des paramètres 14 peut comprendre pour chacun des canaux du réseau 18 un planning de diffusion pour la semaine en cours et éventuellement pour le week-end. Ces plannings peuvent se présenter sous la forme de tableaux à double entrée donnant pour chaque jour de la semaine et chaque plage horaire un identifiant de cellule de la base de données de programmes 15 où se trouve mémorisé le programme à diffuser durant cette plage horaire. Le module de traitement 21 accède à ces tableaux pour remplir les trames d'écran 22a, 22b et 22c en fonction de l'heure courante.

Le module de traitement 21 peut également être conçu pour recevoir et traiter des messages de début et de fin de séquence pour déclencher et arrêter la diffusion de la séquence d'annonce. A la réception de tels messages, le module de traitement 21 active ou désactive le module de séquencement 23.

## Revendications

1. Procédé pour informer les utilisateurs d'un réseau (18) de diffusion de programmes audiovisuels, des horaires de diffusion et du contenu des programmes diffusés sur au moins un canal du réseau de diffusion, les programmes audiovisuels étant associés à des informations concernant le contenu du programme et à des horaires de diffusion,
**caractérisé en ce qu'**il comprend les étapes consistant à :
- insérer au moins une partie des informations et des horaires de diffusion associés à chaque programme dans des zones respectives prédéfinies de trames d'écran pour réaliser des écrans donnant des informations sur les horaires de diffusion et le contenu des programmes,
- établir un lien entre chacun desdits écrans de manière à constituer une séquence d'annonce enchaînant la diffusion desdits écrans, et
- diffuser la séquence d'annonce sur un canal du réseau, chaque écran étant diffusé sur le réseau pendant une durée prédéfinie.

2. Procédé selon la revendication 1,
**caractérisé en ce que** la séquence comprend :
- au moins un écran (22a) donnant la liste des programmes en cours de diffusion sur les différents canaux,
- au moins un écran (22b) par canal donnant la liste des prochains programmes diffusés sur ce canal, et
- un écran (22c) par programme diffusé donnant des informations sur le contenu et les horaires de diffusion du programme.

3. Procédé selon la revendication 1 ou 2,
**caractérisé en ce que** chaque écran de la séquence d'annonce est associé à la référence d'un autre écran de la séquence, de manière à définir l'ordre dans lequel les écrans de la séquence sont diffusés.

4. Procédé selon la revendication 3,
**caractérisé en ce que** le dernier écran de la séquence d'annonce est associé à la référence du premier écran de la séquence, de manière à ce que la séquence soit diffusée en permanence.

5. Procédé selon la revendication 4,
**caractérisé en ce qu'**un canal du réseau est réservé à la diffusion de la séquence

6. Procédé selon l'une des revendications 1 à 5,
**caractérisé en ce que** chaque écran (22a, 22b, 22c) de la séquence est diffusé avec un fond sonore.

7. Procédé selon l'une des revendications 1 à 6,
**caractérisé en ce que** les informations concernant le contenu d'un programme diffusé comprennent une séquence vidéo de promotion du programme qui est insérée dans la séquence d'annonce.

8. Procédé selon l'une des revendications 1 à 7,
**caractérisé en ce qu'**il comprend en outre la mise à jour des écrans de la séquence d'annonce au début et à la fin de la diffusion de chaque programme sur le réseau, et à chaque nouvelle planification de la diffusion d'un programme.

9. Procédé selon l'une des revendications 1 à 8,
**caractérisé en ce que** les programmes diffusés sur le réseau (18) sont stockés dans une base de programmes (15) comprenant une cellule de stockage par programme susceptible d'être diffusé par le réseau, chaque cellule de stockage étant associée à des plages horaires de diffusion, le procédé comprenant en outre la mise à jour des écrans (22) de la séquence d'annonce à chaque remplacement d'un programme stocké dans une cellule de la base de programmes.

10. Procédé selon la revendication 9,
**caractérisé en ce que** lorsqu'un programme diffusé est remplacé par un nouveau programme, il comprend en outre la mise à jour automatique, à une heure paramétrable, de la séquence d'annonce pour annoncer la diffusion du nouveau programme.
